# EUROPEAN PATENT SPECIFICATION

(11) **EP 2 557 344 B1**
(45) Date of publication and mention of the grant of the patent: **22.10.2014**
(21) Application number: 11006632.1
(22) Date of filing: 12.08.2011
(51) Int. Cl.: F16K 31/122, F16K 39/02, F02B 37/18

(54) **Counter-biased valve and actuator assembly**
Gegenvorgespanntes Ventil und Aktoranordnung
Clapet contre-polarisé et ensemble d'actionneur

(43) Date of publication of application: 13.02.2013
(73) Proprietor: Dayco, LLC., Amherst NY 14226-0810 (US); Synapse Engineering, Inc., San Diego, CA 92121 (US)
(72) Inventor: Medina, Peter Johann, San Diego, CA 92123 (US)
(74) Representative: Riedel, Peter

(56) References cited:
- EP-A1- 1 860 357
- EP-A2- 1 574 771
- WO-A1-2008/151565
- US-B1- 6 276 125

## Description

### BACKGROUND

### Field of Use

The embodiments described herein relate to the mechanical arts. More specifically, the present invention relates to valve actuator assemblies.

### Description of the Related Art

It can be appreciated that valve actuator assemblies have been in use for years. These assemblies control the flow of liquids or gasses in a variety of industrial and mechanical settings. Typically, valve actuator assemblies comprises one of three main types of design: those comprising diaphragm actuators, actuator pistons, or electromechanical actuators. These assemblies are typically used in controlling one or more functions of internal combustion engines or in other industrial applications.

The main drawback with conventional valve actuator assemblies is that the valve typically needs to be biased closed with an extremely high spring pre-load in order to counter-act or negate the force created by the working pressure of fluid (or gas) against the face of the valve. Another problem with conventional valve actuator assemblies is that the high spring pre-load requirement reduces the responsiveness of the actuator to control the valve. Another problem with conventional valve actuator assemblies is that they are typically over-designed to be far more robust than they would otherwise need to be in order to withstand the high spring pressures mentioned heretofore.

Document EP1574771 A2 discloses a nozzle valve (Fig. 1) with an actuator piston 1, two control chambers 12, 14 and a counter-biasing chamber 8. No teaching is provided, that the valve face surface area 3 is greater than the counter-biasing surface area 7. Document US 6276125 B1 discloses a nozzle valve with an 'actuator piston" 80 (Figs. 1, 2), a "counter biasing chamber" 140 and one single control chamber" 150. No other control chambers are illustrated. Document WO 2008/151565 A1 discloses another nozzle valve (Fig. 6) without teaching that the actuator piston and the housing together define a counter-biasing chamber and a plurality of control chambers. Document EP 1860357 A1 discloses a valve assembly with an "actuator piston' 4 (Fig. 10) and one single "control chamber" containing a spring 5. No other control chambers are illustrated.

While the valve actuator assemblies just described may be suitable for the particular purpose to which they address, it would be desirable to reduce the high spring pressures in order to reduce the design requirements of the valve and actuator and improve responsiveness.

### SUMMARY

In view of the foregoing disadvantages inherent in the known types of valve actuator assemblies now present in the prior art, the embodiments described herein provide for a new valve and counter-biased valve actuator assembly. The counter-biased valve and actuator assembly uses a fluid (or gas) working pressure to eliminate, reduce, or overcome a force acting on the face of a valve by communicating a common working pressure of the fluid (or gas) to a substrate with a resultant force vector opposite of the valve face, wherein the same can be utilized for improving the function of the common valve and actuator assembly design as it is known heretofore.

The general purpose of the embodiments described herein, which will be described subsequently in greater detail, is to provide a new valve and valve actuator assembly, counter-biased by a working fluid (or gas) pressure, that has many of the advantages of the valve actuator assemblies mentioned heretofore and many novel features that result in a new valve and valve actuator assembly, counter-biased by working fluid (or gas) pressure, which is not anticipated, rendered obvious, suggested, or even implied by any prior art valve actuator assemblies, either alone or in any combination thereof.

To attain this, the embodiments described herein generally comprise a valve and a pneumatic/hydraulic piston actuator assembly. The valve comprises a standard valve defined by a valve stem and a valve head, the valve head having a valve face. The valve has a port formed axially through the length of the valve, through the valve face and extending through the end of the valve stem. The port communicates a fluid (or gas) working pressure acting on the valve face to a counter-biasing chamber.

One object of the embodiments described herein is to provide a valve and counter-biased valve actuator assembly, counter-biased by a working fluid (or gas) pressure, that will overcome the shortcomings of prior art devices.

Another object of the embodiments described herein is to provide a valve and valve actuator assembly, counter-biased by a working fluid (or gas) pressure, for improving the function of a common valve and actuator assembly design, as it is known heretofore.

Another object is to provide a valve and valve actuator assembly, counter-biased by working fluid (or gas) pressure, that eliminates, reduces, or overcomes a force acting on the face of a valve by communicating a common working pressure of the fluid (or gas) to a substrate with a resultant force vector opposite the valve face.

Another object is to provide a valve and valve actuator assembly, counter-biased by a working fluid (or gas) pressure, that reduces the need for unnecessarily high spring or force pre-loads to bias the valve closed against the fluid (or gas) working pressure.

Another object is to provide a valve and valve actuator assembly, counter-biased by a working fluid (or gas) pressure, that improves the actuation response time, measured by the ability of the valve to operate at higher frequencies, by reducing or eliminating the spring or force pre-load to bias the valve.

Other objects and advantages of the present invention will become obvious to the reader and it is intended that these objects and advantages are within the scope of the embodiments present herein.

To accomplish the above and related objectives, the embodiments described herein are illustrated in the accompanying drawings, attention being called to the fact, however, that the drawings are for illustrative purposes only, and that changes may be made in the specific construction illustrated without departing from the general concepts described herein.

### BRIEF DESCRIPTION OF THE DRAWINGS

The features, advantages, and objects of the present invention will become more apparent from the detailed description as set forth below, when taken in conjunction with the drawings in which like referenced characters identify correspondingly throughout, and wherein:

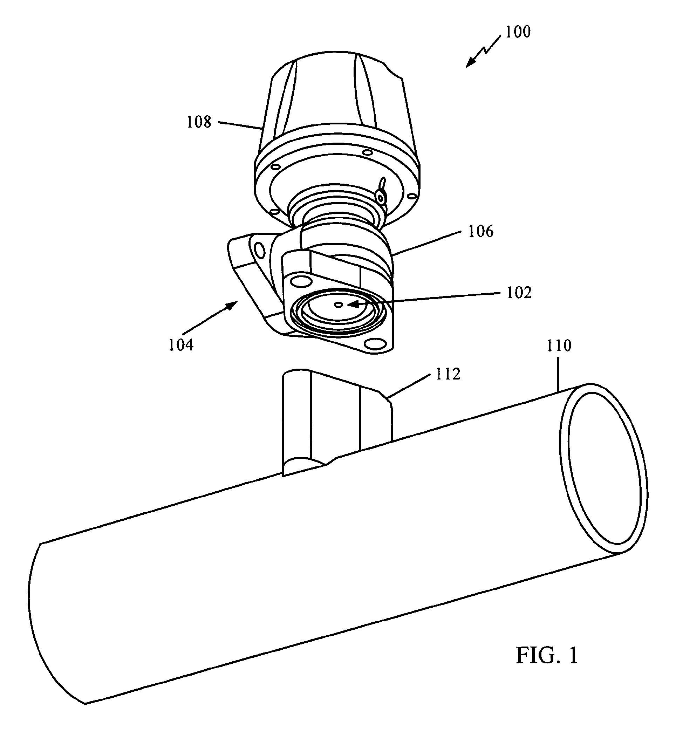

FIG. **1** illustrates a valve actuator assembly in accordance with one embodiment, shown in a perspective view;

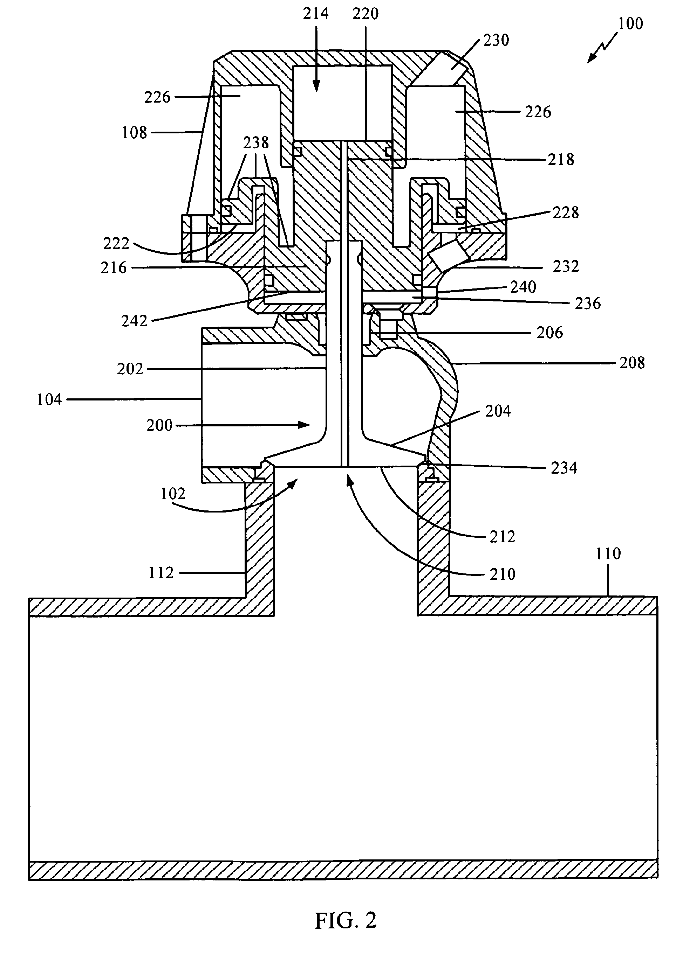

FIG. **2** illustrates the valve actuator assembly of FIG. **1** in a cutaway view;

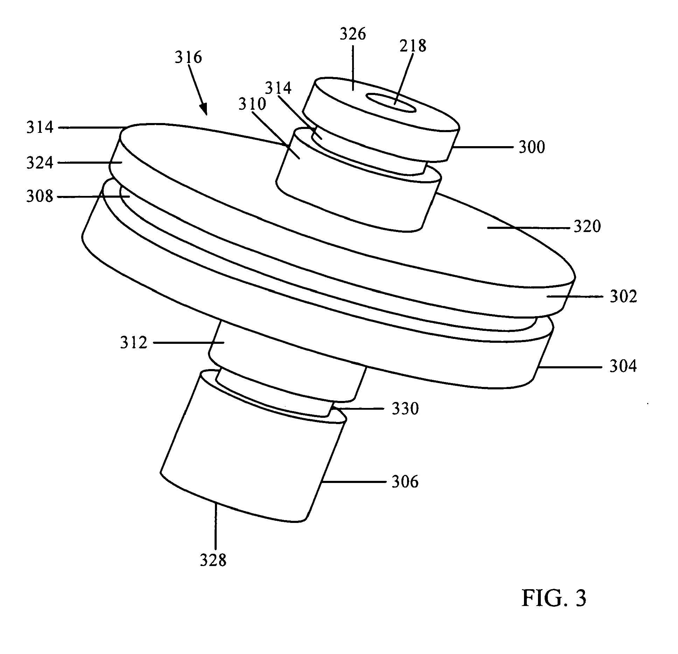

FIG. **3** illustrates another embodiment of an actuator piston used within the valve actuator assembly of FIG. **1** or FIG. **2****;** and

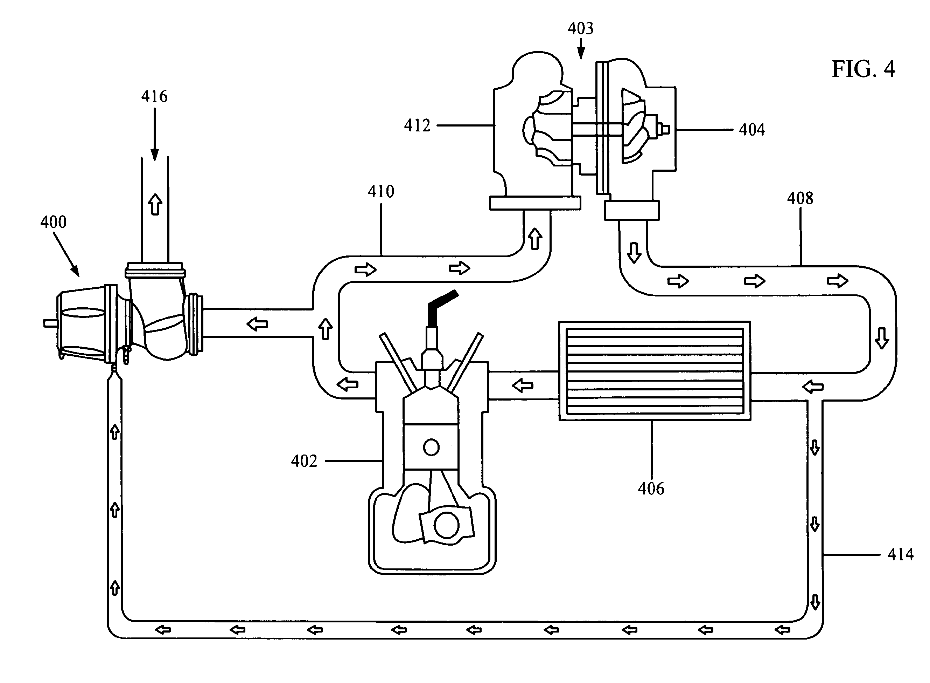

FIG. **4** illustrates the valve actuator assembly of FIG. **1** or FIG. **2** used in a typical automotive application, in this example, a turbocharged automotive engine.

### DETAILED DESCRIPTION

Valve actuator assemblies are typically used to control the position of a valve in applications to perform flow or pressure regulation through the valve actuator assembly. The embodiments described herein provide for an ability to alter the influence of working pressures acting on a face of a valve in such an assembly. The fluid or gaseous pressure acts on a surface area of the valve face and generally produces a resultant force in a vector normal and opposite to this surface. One of the primary objectives of the embodiments disclosed herein is to reduce, eliminate, or overcome the force of the working pressure on the valve face.

Turning now to the drawings, FIG. **1** illustrates a valve actuator assembly in accordance with one embodiment, shown in a perspective view. Valve actuator assembly **100** comprises an inlet port **102,** an outlet port **104,** a valve housing **106,** and an actuator housing **108.** Other components of valve actuator assembly **100,** not visible in FIG. **1**, will be described later herein. Valve actuator assembly **100** attaches to conduit **110** via channel **112** via screws or other known fastening methods. It should be understood that inlet port **102** and outlet port **104** may be interchanged, i.e., fluid or gas may, alternatively, enter port **104** and exit via port **102.** Outlet port **104** connects to a second conduit (not shown) which carries the gas or liquid from outlet port **104.** The flow of fluid or gas from conduit **110** to the second conduit is controlled by a valve contained within valve actuator assembly, which is described in more detail below.

The actuator housing **108** is defined in one embodiment to mate with an actuator piston (not shown), the resultant combination thus functioning as a single-tier actuator piston. Their mating defines at least two volumetric chambers in the actuator housing **108,** which will be described in greater detail later herein.

The actuator housing **108** is typically characterized as a two-component structure modeled about the geometry of the actuator piston. In one embodiment, the actuator housing assembly takes the form of two-chambers and has the ability to accommodate either the actuator piston based on a two-substrate diaphragm or a singular component design. In another embodiment, the actuator housing is defined by the geometry of a multi-tiered actuator piston described in FIG. **3** later herein.

FIG. **2** illustrates the valve actuator assembly **100** of FIG. **1** in a cutaway view. Shown is valve actuator assembly **100** mounted to a conduit **110** via channel **112.** Valve actuator assembly **100** is typically secured to channel **112** via retaining screws or some other type of mechanical fastener. Valve actuator assembly **100** comprises a valve **200,** which is commonly known as a "poppet" valve. Other types of valves could be used in alternative embodiments. Valve **200** is defined by a valve stem **202** and valve head **204,** the valve head **204** having a valve face **212.** Valve **200** is secured via a channel **206** formed between valve housing **208** and actuator housing **108,** with one end of valve **200** being retained within actuator piston **216,** as shown. The actuator piston **216** generally retains the valve **200** so as to impart resultant fluid or gaseous pressures acting on substrate areas of the piston, as will be explained in more detail below.

Valve **200** further comprises a port **210** defined axially through the entire length of valve **200,** including stem **202** and valve face **212.** A second port **218** is defined through actuator piston **216** that is at least partially aligned with port **210** in valve **200.** The combined ports **210** and **218** form an opening or conduit that communicates working fluid (or gas) pressure from the conduit **110** acting on the valve face **212** to a counter-biasing chamber **214.** In another embodiment, the valve **200** and actuator piston **216** are formed as a single unit having a single port formed through the entire structure, from valve face **212** through substrate area **220.**

The substrate area **220** of actuator piston **216** in the counter-biasing chamber **214** forms a surface that is subjected to a resultant vector force asymmetrically normal to the force imposed against valve face **212.** In other words, the fluid or gas pressure in conduit **110** is imparted to counter-biasing chamber **214** via ports **210** and **218,** which acts on the substrate area **220** of actuator piston **216,** driving actuator piston **216** down, in this case, towards conduit **110.** The force on actuator piston **216** is proportional to the amount of surface area of substrate area **220;** the larger the surface area, the greater the force on actuator piston **216.**

The actuator piston **216** acts as both the main actuator and valve retainer. In one embodiment, as shown in FIG. **2****,** the actuator piston in combination with housing **108** forms multiple pressure control chambers **214, 226, 228** and **236.** Each of these control chambers are associated with a substrate area, or surface, of a portion of actuator piston **216.** These are shown as substrate areas **220, 238, 222,** and **242,** respectively, shown in bold. It should be understood that these control chambers and substrate areas have a cross section that is generally associated with the overall geometry of the actuator housing **108,** in this embodiment, circular when viewed from above. Each of the pressure control chambers is connected to a respective pressure control port, shown as pressure control ports **210/218, 230, 232,** and **240,** respectively.

The force exerted on actuator piston **216** is in proportion to the pressures seen inside each of the control chambers and associated substrate areas of piston actuator **216** upon which the pressure is exerted. The number of control chambers may vary depending upon the application. In addition, the number of chambers in use in any particular application may vary. For example, a valve actuator assembly could be designed and built comprising 3 control chambers, while in use, only applying a pressure control signal to two of the three control chambers. Any unused control chambers may be sealed by installing a cap onto a respective pressure control port or they may be left open to atmospheric pressure, depending upon the particular application.

The actuator piston **216** is generally defined by, but not limited to, three commonly known geometries. In one embodiment, as shown in FIG. **2****,** the actuator piston **216** comprises a simple valve retainer that is connected to a two-substrate flexible diaphragm. In another design, the actuator piston **216** comprises a single component that retains the valve and has two substrate areas in counter axial orientations. In yet another embodiment, the actuator piston **216** comprises a multi-tiered design as described by patent 6,863,260 wherein it acts as a retainer, but also defines four volumetric chambers and four actuation substrates. This design is described in FIG. **3** and explained as follows.

FIG. **3** illustrates another embodiment of actuator piston **216,** shown here as actuator piston **316.** As shown, actuator piston **316** comprises an elliptical or polygonal-profiled object extruded in one axis of varying diameters. Actuator piston **316** comprises a shaft **318** and tiers **300 - 314,** each tier comprising a different geometric profile from other tiers, or levels, extruded on actuator piston **316.** Each tier may have different diameters, widths or dimensions to define a surface area available for a pressure control signal to act upon. Shaft **318** comprises a longitudinal extension, such as a rod, or cylinder, having one of any number of cross-sections, extending the length of actuator piston **316** around which the various tiers are imposed. Shaft **318** additionally comprises a first shaft end **326** and a second shaft end **328.** In some cases, a tier may have a diameter equal to the diameter of shaft **318,** for example, tiers **300, 310, 312,** and **306.** A resultant force on actuator piston **316** is produced by the combination of pressure control signals acting upon the different surface areas defined by the tiers.

The geometric profiles representing the tiers do not necessarily have to be axially aligned. The most common implementation of actuator piston **316** will be one wherein actuator piston **316** will travel in an axial direction that is perpendicular to the geometric profiles of the tiers. The piston/housing relationship typically assumes that actuator piston **316** will be the component that will travel and move in relation to the actuator housing 108.

Each tier generally comprises a top surface, a bottom surface, and an outer wall, such as top surface **320,** and an outer wall **324** (a bottom surface not shown). A top surface of one tier may be a bottom surface of another tier. For example, top surface **320** of tier **302** is the same surface as a bottom surface of tier **310;** the bottom surface of tier **314** is the same surface as a top surface of tier **308.** As mentioned previously, the outer walls of some, or all, of the tiers are in contact with the various inner walls defining cavities of actuator housing **108.** This contact forms chambers that change in volume as either actuator piston **316,** or actuator housing **108,** travels along an axis common to both components. The surfaces of the cavity inner walls may act as a sealing surface with either the material of the tiers or with a seal housed by, or integrated into, the tier outer walls. Alternatively, actuator housing **108** may comprise materials for providing a sealing surface with the tiers. Furthermore, independent seals such as O-rings, for example, can also be integrated into the tiers and/or shaft **318**, to mate with the housing cavity inner surfaces to create a seal. Any number of existing seal technologies can be integrated into actuator piston **316**, including, but not limited to, o-rings, washers and metal seals. In the example of FIG. **3****,** such independent seals may be placed around tier **314**, tier **308**, or tier **316**.

Although shown in FIG. **3** as a piston of single-piece construction, actuator piston **316** can alternatively be constructed of distinct and separate objects that fit the aforementioned description and that are connected together to form resultant actuator piston **316**. Accordingly, actuator piston **316** may be manufactured of any currently available materials, such as plastic, metal, or any other rigid or semi-rigid material, depending on each particular application.

Referring back to FIG. **2**, pressure control signals may be communicated to control chambers **226**, **228**, and **236** via pressure control ports **230**, **232**, and **240**, respectively, to control operation of valve **202**. These pressures each may be applied as positive pressures or negative pressures and may originate from different sources. The pressure control signals typically comprise gas, liquids, or a combination of the two. In addition, each pressure control port could transmit a unique pressure type. For example, the pressure control signal communicated to pressure control port **230** could comprise a gas while the pressure control signal communicated to pressure control port **232** could comprise a liquid. The pressure control signals introduced to pressure control ports **230**, **232**, and **240** can either be the same or mutually exclusive, and may be introduced at varying points in time so as to control the position of valve **202** relative to sealing surface **234**, and thereby controlling the flow of material from discharge port **104**. In any given application, there can exist a multiplicity of chambers defined by annular walls, end walls, and tier surfaces used to create forces operating against actuator piston **216**. The quantity of such chambers, tier surface areas, or other chamber-defining characteristics need not be equal or similar.

Actuator piston **216** will move in one of two directions, either up or down with respect to actuator housing **108**. For example, if a pressurized fluid is communicated through pressure control port **232** into control chamber **228**, that fluid, barring any other forces acting on actuator piston **216,** will act to effectively move the actuator piston **216** in a direction that allows for the expansion of the pressurized fluid or gas into chamber **228.** The actuator piston **216** will move in a direction where the force will find a differential, i.e., in an upward movement in this example, or away from conduit **110** and, in turn, cause valve **200** to open with respect to sealing surface **234.**

The actuator piston **216** will be displaced in a direction proportional to the net combined force operating against each substrate surface. Each of these forces are, in turn, proportional to pressure signals applied via pressure control ports and into respective pressure control chambers, against respective substrate surface areas. For example, a positive pressure signal applied to control chamber **226** via pressure control port **230** would be offset an equal, positive pressure signal applied to control chamber **228** via pressure control port **232** if both substrate areas **238** and **222** are equal in surface area. In this case, piston actuator **216** and valve **200** would not move. In another example, if the same pressures were applied to control chambers **226** and **228,** but the surface area of substrate **238** were twice as great as the surface area of substrate **222.** In yet another example, if a positive pressure is communicated to pressure control port **230** and a negative pressure is communicated to pressure control port **232,** and the tier surfaces of each control chamber are equal, the actuator piston **216** will move in a downward direction at twice the force of each individual pressure control signal (assuming, of course, that the valve **202** has not yet contacted sealing surface **234).**

Assembly of valve actuator assembly **100** generally begins with the actuator housing **108** mating with the actuator piston **216,** which then mates with the valve **202** and finally valve housing **208.** There are several permutations of design and assembly available. Other embodiments may find that the design requirements necessitate a one-piece valve and actuator piston design. The interconnectivity of the components would be fundamentally unchanged however.

There exists myriad methodologies to manufacture these components. Processes that can be used include, but are not limited to, investment casting, die casting, injection molding and wrought machining. Materials that can be used can include, but are not limited to, ferrous and non-ferrous metals, plastics and advanced resin-based composites.

FIG. **4** illustrates a valve actuator assembly **400** used in a typical automotive application, in this example, a turbocharged automotive engine **402.** Ambient air enters an inlet **404** of turbocharger **403** to be compressed and routed to a charge cooler **406** via ducting **408.** The compressed air then enters the engine **402** and the spent gases exit through ducting **410** and into an inlet of an exhaust turbine section **412** of turbocharger **403.** In order to regulate the operating speed of the turbocharger, a regulating valve, commonly known as a wastegate, is generally required. These mechanical valve assemblies typically comprise a common "poppet" valve that regulates exhaust gas pressure and flow entering the turbocharger. The valve is typically biased in the closed position by a spring inside a valve housing assembly. In the example of FIG. **4****,** this regulating valve comprises valve actuator assembly **400** as described previously hereto. The valve inside the valve actuator assembly **400** may be biased in a closed position by a spring and the valve and actuator inside the valve assembly **400** comprises ports **210** and **218** to respond to the pressure of the gas inside ducting **410** acting on the valve face. Attributes of the spring, such as the size, restoring force, and spring constant, is typically reduced from what would normally be required to bias the valve in the closed position, due to the equalizing effect of ports **218** and **210.**

In the example of FIG. **4****,** valve actuator assembly **400** is controlled by an actuating pressure control signal **414** from the compressed ambient air from turbocharger **403** prior to entering cooler **406.** It should be understood that this pressure control signal **414** could, alternatively, originate from the outlet of cooler **406** or be supplied from a source other than the components shown in FIG. **4****.** In the example of FIG. **4****,** the pressure control signal **414** is a positive pressure, connected to pressure control port **232,** that operates to open the valve inside the actuator assembly **400.** As the valve is opened, exhaust gases from ducting **410** are passed by the valve actuator assembly **400** and discharged through conduit **416,** typically to ambient air or a noise-suppression system. As the valve inside valve actuator assembly **400** opens, pressure and flow of exhaust gasses is reduced inside ducting **410,** thereby slowing the rotation of turbocharger **403.** If the pressure inside ducting **408** becomes too small, pressure control signal **414** likewise is reduced, causing the valve inside valve actuator assembly **400** to close, thereby increasing the pressure inside ducting **410.** As a result, turbocharger **403** increases it's rotation. In this manner, a feedback loop is established to regulate turbocharger **403.**

It should be noted that in this example, there is only one pressure control signal applied to the valve actuator assembly, pressure control signal **414** connected to pressure control port **232.** The second pressure control port remains unconnected. In this arrangement, the force of the exhaust inside ducting **410** and the pressure control signal **414** acts to push the valve open, while a biasing spring acts to close the valve. In other embodiments, the second pressure control port can be connected to a second pressure control signal to further control operation of the valve. In still other embodiments, valve actuator assembly **400** could comprise more than two pressure control ports, each pressure control port connected to a particular control chamber within the valve actuator assembly. Finally, in other embodiments, one or more unused ports may be capped so that any gases inside respective control chambers remains trapped inside those control chambers.

With respect to the above description, it is to be realized that the optimum dimensional relationships of the various components of the pipe couplers include variations in size, materials, shape, form, function and manner of operation, assembly and use, and are deemed readily apparent and obvious to one skilled in the art. All equivalent relationships to those illustrated in the drawings and described in the specification are intended to be encompassed by the embodiments described herein. Therefore, the foregoing is considered as illustrative only of the principles and descriptions provide herein. Further, since numerous modifications and changes may be contemplated by those skilled in the art, it is not desired to limit the embodiments described herein to the exact construction and operation shown and described, and accordingly, all suitable modifications and equivalents may be resorted to, falling within the scope of the present disclosure.

## Claims

1. A valve actuator assembly, comprising:
an actuator housing (108);
an actuator piston (216) disposed within the actuator housing (108), the actuator piston (216) comprising a first port (210) formed through the actuator piston (216), wherein the actuator piston (216) and the actuator housing (108), together, define a counter-biasing chamber (214) connected to the first port (210) and a plurality of control chambers (226, 228, 236);
wherein a first control chamber (228) and the counter-biasing chamber (214) are both positioned on the same side relative to the actuator piston (216);
a first pressure control port (232), connected to the first control chamber (228), for passing a pressure control signal to the first control chamber (228) and into contact with a surface of the actuator piston (216); and
a valve (200) comprising a second port (218) formed axially through the valve (200), the second port (218) at least partially aligned with the first port (210);
**characterized in, that** the valve (200) has a valve face (212) having a surface area that is greater than the surface area of the portion of the actuator piston (216) forming a portion of the counter-biasing chamber (214).

2. The valve actuator assembly of claim 1, further comprising:
a valve housing (106) connected to the actuator housing (108), comprising an inlet port (102) and a discharge port (104).

3. The valve actuator assembly of claim 1,
wherein the actuator piston (216) and the valve (200) comprise a single entity and the first and second ports (210, 218) join to form a single port through the single entity.

4. The valve actuator assembly of claim 1,
wherein the valve (200) comprises a poppet valve.

5. The valve actuator assembly of claim 1, further comprising:
at least two lower control chambers (228, 236) formed by the actuator piston (216) and the actuator housing (108), wherein each lower control chamber (228, 236) includes an individual pressure control port (232, 240) connected thereto.

6. The valve actuator assembly of claim 1, further comprising:
a second control chamber (228, 236) formed between the actuator piston (216) and the actuator housing (108); and
means for passing a second pressure control signal to the second control chamber (228, 236).

7. A method for controlling flow, comprising:
providing a valve assembly to control fluid or gaseous flow from a first conduit (110) to a second conduit, the valve assembly comprising:
an actuator housing (108);
an actuator piston (216) disposed within the actuator housing (108), the actuator piston (216) comprising a first port (210) formed through the actuator piston (216), wherein the actuator piston (216) and the actuator housing (108), together, define a counter-biasing chamber (214) connected to the first port (210) and a plurality of control chambers (226, 228, 236) where at least one of the pressure chambers (226, 228, 236) is an upper pressure chamber (226) positioned above a surface of the actuator piston; and
a valve (200) comprising a second port (218) formed axially through the valve (200), the second port (218) at least partially aligned with the first port (210);
wherein the upper control chamber (226) is connectable to a source of variable positive pressures, negative pressures, or combinations thereof;
**characterized in, that** the valve (200) has a valve face (212) having a surface area that is greater than the surface area of the portion of the actuator piston (216) forming a portion of the counter-biasing chamber (214); and
operating the valve (200) by applying a pressure control signal to a pressure control port (230, 232, 240) on the actuator assembly, the pressure control port (230, 232, 240) connected to the control chamber (226, 228, 236).

8. The method of claim 7, comprising:
operating the valve (200) by applying a second pressure control signal to a second pressure control port (232, 240) on the actuator assembly, the second pressure control port (232, 240) connected to the second control chamber (228, 236).

## Patentansprüche

1. Eine Ventilaktuatoranordnung, umfassend:
ein Aktuatorgehäuse (108);
einen im Aktuatorgehäuse (108) angeordneten Aktuatorkolben (216), wobei der Aktuatorkolben (216) einen durch den Aktuatorkolben (216) hindurch geformten ersten Kanal (210) aufweist, wobei der Aktuatorkolben (216) und das Aktuatorgehäuse (108) gemeinsam eine mit dem ersten Kanal (210) und einer Mehrzahl von Kontrollkammern (226, 228, 236) verbundene Gegenvorspannungskammer (214) definieren; wobei eine erste Kontrollkammer (228) und die Gegenvorspannungskammer (214) beide auf der gleichen Seite relativ zum Aktuatorkolben (216) positioniert sind;
einen mit der ersten Kontrollkammer (228) verbundenen ersten Druckkontrollkanal (232) fiir die Durchleitung eines Druckkontrollsignals zur ersten Kontrollkammer (228) und in Kontakt mit einer Oberfläche des Aktuatorkolbens (216); und
ein Ventil (200), welches einen axial durch das Ventil (200) hindurch geformten zweiten Kanal (218) aufweist, wobei der zweite Kanal (218) zumindest teilweise mit dem ersten Kanal (210) fluchtet;
**dadurch gekennzeichnet, dass** das Ventil (200) eine Ventilfläche (212) mit einem Flächeninhalt aufweist, der größer ist als der Flächeninhalt desjenigen Teils des Aktuatorkolbens (216), welcher einen Teil der Gegenvorspannungskammer (214) bildet.

2. Die Ventilaktuatoranordnung nach Anspruch 1, des Weiteren aufweisend:
ein mit dem Aktuatorgehäuse (108) verbundenes Ventilgehäuse (106),
umfassend einen Einlasskanal (102) und einen Auslasskanal (104).

3. Die Ventilaktuatoranordnung nach Anspruch 1,
wobei der Aktuatorkolben (216) und das Ventil (200) aus einer einzelnen Einheit bestehen und die ersten und zweiten Kanäle (210, 218) zur Formung eines einzelnen Kanals durch die einzelne Einheit verbunden sind.

4. Die Ventilaktuatoranordnung nach Anspruch 1,
wobei das Ventil (200) aus einem Tellerventil besteht.

5. Die Ventilaktuatoranordnung nach Anspruch 1, des Weiteren aufweisend:
mindestens zwei mittels des Aktuatorkolbens (216) und des Aktuatorgehäuses (108) geformte untere Kontrollkammern (228, 236), wobei jede untere Kontrollkammer (228, 236) einen damit verbundenen individuellen Druckkontrollkanal (232, 240) beinhaltet.

6. Die Ventilaktuatoranordnung nach Anspruch 1, des Weiteren aufweisend:
eine zwischen dem Aktuatorkolben (216) und dem Aktuatorgehäuse (108) geformte zweite Kontrollkammer (228, 236); und
Mittel zur Durchleitung eines zweiten Druckkontrollsignals zur zweiten Kontrollkammer (228, 236).

7. Ein Verfahren zum Kontrollieren eines Flusses, aufweisend:
Bereitstellen einer Ventilanordnung zum Kontrollieren eines flüssigen oder gasförmigen Flusses von einem ersten Kanal (110) zu einem zweiten Kanal,
wobei die Ventilanordnung aufweist:
ein Aktuatorgehäuse (108);
einen im Aktuatorgehäuse (108) angeordneten Aktuatorkolben (216), wobei der Aktuatorkolben (216) einen durch den Aktuatorkolben (216) hindurch geformten ersten Kanal (210) aufweist, wobei der Aktuatorkolben (216) und das Aktuatorgehäuse (108) gemeinsam eine mit dem ersten Kanal (210) und einer Mehrzahl von Kontrollkammern (226, 228, 236) verbundene Gegenvorspannungskammer (214) definieren, wobei zumindest eine der Druckkammern (226, 228, 236) eine oberhalb einer Oberfläche des Aktuatorkolbens positionierte obere Druckkammer (226) ist; und
ein Ventil (200), welches einen axial durch das Ventil (200) hindurch geformten zweiten Kanal (218) aufweist, wobei der zweite Kanal (218) zumindest teilweise mit dem ersten Kanal (210) fluchtet;
wobei die obere Kontrollkammer (226) mit einer Quelle von variablen positiven Drücken, negativen Drücken oder einer Kombination davon verbindbar ist;
**dadurch gekennzeichnet, dass** das Ventil (200) eine Ventilfläche (212) mit einem Flächeninhalt aufweist, der größer ist als der Flächeninhalt desjenigen Teils des Aktuatorkolbens (216), welcher einen Teil der Gegenvorspannungskammer (214) bildet; und
Betreiben des Ventils (200) durch Aufbringen eines Druckkontrollsignals auf einen Druckkontrollkanal (230, 232, 240) auf der Aktuatoranordnung, wobei der Druckkontrollkanal (230, 232, 240) mit der Kontrollkammer (226, 228, 236) verbundenen ist.

8. Das Verfahren nach Anspruch 7, umfassend:
Betreiben des Ventils (200) durch Aufbringen eines zweiten Druckkontrollsignals auf einen zweiten Druckkontrollkanal (232, 240) auf der Aktuatoranordnung, wobei der zweite Druckkontrollkanal (232, 240) mit der zweiten Kontrollkammer (228, 236) verbundenen ist.

## Revendications

1. Ensemble d'actionneur de soupape comprenant :
un boîtier d'actionneur (108) ;
un piston d'actionneur (216) disposé dans le boîtier d'actionneur (108), le piston d'actionneur (216) étant traversé par un premier orifice (210), étant précisé que le piston d'actionneur (216) et le boîtier d'actionneur (108) définissent ensemble une chambre de contre-sollicitation (214) qui est reliée au premier orifice (210), et plusieurs chambres de commande (226, 228, 236) ; étant précisé qu'une première chambre de commande (228) et la chambre de contre-sollicitation (214) se trouvent toutes les deux du même côté par rapport au piston d'actionneur (216) ;
un premier orifice de commande de pression (232) relié à la première chambre de commande (228) pour transmettre un signal de commande de pression à la première chambre de commande (228) et l'amener au contact d'une surface du piston d'actionneur (216) ; et
une soupape (200) traversée axialement par un second orifice (218), le second orifice (218) étant au moins en partie dans l'alignement du premier orifice (210) ;
**caractérisé en ce que** la soupape (200) a une face de soupape (212) qui présente une superficie supérieure à la superficie de la partie du piston d'actionneur (216) qui forme une partie de la chambre de contre-sollicitation (214).

2. Ensemble d'actionneur de soupape de la revendication 1, comprenant par ailleurs :
un boîtier de soupape (106) qui est relié au boîtier d'actionneur (108) et qui présente un orifice d'admission (102) et un orifice d'évacuation (104).

3. Ensemble d'actionneur de soupape de la revendication 1,
étant précisé que le piston d'actionneur (216) et la soupape (20) comprennent une seule entité et que les premier et second orifices (210, 218) se rejoignent pour former un seul orifice à travers cette entité.

4. Ensemble d'actionneur de soupape de la revendication 1,
étant précisé que la soupape (20) comprend une soupape à champignon.

5. Ensemble d'actionneur de soupape de la revendication 1, comprenant par ailleurs :
au moins deux chambres de commande inférieures (228, 236) formées par le piston d'actionneur (216) et le boîtier d'actionneur (108), étant précisé que chaque chambre de commande inférieure (228, 236) présente un orifice de commande de pression individuel (232, 240) qui lui est relié.

6. Ensemble d'actionneur de soupape de la revendication 1, comprenant par ailleurs :
une seconde chambre de commande (228, 236) formée entre le piston d'actionneur (216) et le boîtier d'actionneur (108) ; et
des moyens pour transmettre un second signal de commande de pression à la seconde chambre de commande (228, 236).

7. Procédé pour commander un écoulement, comprenant la mesure qui consiste :
à prévoir un ensemble de soupape pour commander un écoulement de fluide ou de gaz d'un premier conduit (110) jusqu'à un second conduit, l'ensemble d'actionneur de soupape comprenant :
un boîtier d'actionneur (108) ;
un piston d'actionneur (216) disposé dans le boîtier d'actionneur (108), le piston d'actionneur (216) étant traversé par un premier orifice (210), étant précisé que le piston d'actionneur (216) et le boîtier d'actionneur (108) définissent ensemble une chambre de contre-sollicitation (214) qui est reliée au premier orifice (210), et plusieurs chambres de commande (226, 228, 236), étant précisé que l'une au moins des chambres de pression (226, 228, 236) est une chambre de pression supérieure (226) placée au-dessus d'une surface du piston d'actionneur ; et
une soupape (200) traversée axialement par un second orifice (218), le second orifice (218) étant au moins en partie dans l'alignement du premier orifice (210) ;
étant précisé que la chambre de commande supérieure (226) est apte à être reliée à une source de pressions positives, de pressions négatives variables ou de combinaisons des deux ;
**caractérisé en ce que** la soupape (200) a une face de soupape (212) qui présente une superficie supérieure à la superficie de la partie du piston d'actionneur (216) qui forme une partie de la chambre de contre-sollicitation (214) ; et
l'actionnement de la soupape (200) en appliquant un signal de commande de pression à un orifice de commande de pression (230, 232, 240) sur l'ensemble d'actionneur, l'orifice de commande de pression (230, 232, 240) étant relié à la chambre de commande (226, 228, 236).

8. Procédé de la revendication 7, comprenant :
l'actionnement de la soupape (200) en appliquant un second signal de commande de pression à un second orifice de commande de pression (232, 240) sur l'ensemble d'actionneur, le second orifice de commande de pression (232, 240) étant relié à la seconde chambre de commande (228, 236).
